# EUROPEAN PATENT APPLICATION

(11) **EP 4 582 942 A1**
(43) Date of publication of application: **09.07.2025**
(21) Application number: 23905717.7
(22) Date of filing: 07.12.2023
(51) Int. Cl.: G06F 9/451, G06F 16/901, G06F 1/3234

(54) **RENDERING METHOD AND APPARATUS, AND ELECTRONIC DEVICE AND STORAGE MEDIUM**

(30) Priority: 20.12.2022 CN 202211640217
(71) Applicant: Huawei Technologies Co., Ltd., Shenzhen, Guangdong 518129 (CN)
(72) Inventor: NIE, Shiyue, Shenzhen, Guangdong 518129 (CN); LING, Kang, Shenzhen, Guangdong 518129 (CN); XU, Yuqiong, Shenzhen, Guangdong 518129 (CN); LU, Wei, Shenzhen, Guangdong 518129 (CN); ZHOU, Huan, Shenzhen, Guangdong 518129 (CN); WANG, Qi, Shenzhen, Guangdong 518129 (CN)
(74) Representative: Grünecker Patent- und Rechtsanwälte PartG mbB
(86) International application number: PCT/CN2023/137084
(87) International publication number: WO 2024/131550

(57) **Abstract**

This application discloses a rendering method and apparatus, an electronic device, and a storage medium. The rendering method includes: obtaining a to-be-processed instruction corresponding to a node in a render tree, where the render tree is a render tree corresponding to a current display interface; performing information extraction on the to-be-processed instruction, to obtain attribute information of the to-be-processed instruction; determining a first target node with to-be-updated rendering information in the render tree based on the attribute information, and performing rendering information updating on the first target node, to obtain an updated render tree; and rendering an element in the current display interface based on the updated render tree. **In** embodiments of this application, an updating operation on a node whose rendering information does not need to be updated can be removed in a rendering information updating phase, to reduce redundant calculation caused by performing rendering information updating on such a node, and improve rendering performance of a device.

## Description

This application claims priority to Chinese Patent Application No. 202211640217.X, filed with the China National Intellectual Property Administration on December 20, 2022 and entitled "RENDERING METHOD AND APPARATUS, ELECTRONIC DEVICE, AND STORAGE MEDIUM", which is incorporated herein by reference in its entirety.

### TECHNICAL FIELD

This application relates to the field of terminal device technologies, and in particular, to a rendering method and apparatus, an electronic device, and a storage medium.

### BACKGROUND

As a hardware capability of a terminal product is upgraded, and an application development element and a display effect are complex, content that needs to be rendered during displaying of a terminal is also increasing. More to-be-rendered content leads to more corresponding instruction parsing, instruction playback, and instruction delivery operations on a system rendering service side. This inevitably causes a large quantity of computing overheads, certainly including some redundant computing. Consequently, power consumption of the terminal increases, rendering performance decreases, and application scenarios with high power consumption in which there are a plurality of windows and high-frequency refreshing become a bottleneck of user experience of the terminal.

### SUMMARY

Embodiments of this application provide a rendering method and apparatus, an electronic device, and a storage medium, so that before rendering information updating, a node on which rendering information updating does not need to be performed in a render tree can be determined based on extracted instruction information, and an updating operation on such a node can be removed at different granularities, to reduce redundant calculation caused by updating of such a node, and improve rendering performance of a terminal device.

According to a first aspect, an embodiment of this application provides a rendering method, applied to an electronic device. The method includes:
obtaining a to-be-processed instruction corresponding to a node in a render tree, where the render tree is a render tree corresponding to a current display interface;
performing information extraction on the to-be-processed instruction, to obtain attribute information of the to-be-processed instruction;
determining a first target node with to-be-updated rendering information in the render tree based on the attribute information, and performing rendering information updating on the first target node, to obtain an updated render tree; and
rendering an element in the current display interface based on the updated render tree.

The attribute information may include usable information such as a node identifier of a node corresponding to the to-be-processed instruction, a process number of the to-be-processed instruction, and an operation type of the to-be-processed instruction. The element on the screen includes a window on the screen, a control in the window, or the like.

It should be noted that, in this embodiment of this application, a node whose rendering information does not need to be updated is determined at a node level, and a subtree in which the node is located does not need to be in a completely static state.

It can be learned that, in this embodiment of this application, before rendering information updating (in an instruction parsing process), the electronic device may extract usable attribute information from the to-be-processed instruction, and determine, based on the attribute information, the first target node whose rendering information needs to be updated and the node whose rendering information does not need to be updated in the render tree, so that an updating operation on the node whose rendering information does not need to be updated can be removed in a rendering information updating phase, to reduce redundant calculation caused by performing rendering information updating on such a node, and implement instruction pruning of the render tree. The electronic device only needs to update the first target node, and renders the element in the current display interface based on the updated render tree. A large amount of redundant calculation is removed, to reduce a calculation amount of rendering information updating, and further improve rendering performance.

In a possible implementation, the determining a first target node with to-be-updated rendering information in the render tree based on the attribute information includes:
marking a to-be-processed instruction node in the render tree based on the node identifier;
marking a parent node of the to-be-processed instruction node as a to-be-traversed node;
traversing the to-be-traversed node starting from a root node in the render tree, until the to-be-processed instruction node is traversed; and
determining that the to-be-processed instruction node and a child node of the to-be-processed instruction node are the first target node.

In this implementation, the to-be-processed instruction node is a node with a to-be-processed instruction in the render tree. In an instruction parsing phase, the electronic device may quickly index and mark the to-be-processed instruction node in the render tree with reference to the node identifier of the node corresponding to the to-be-processed instruction, and recursively traverse all parent nodes of a current to-be-processed instruction node starting from the current to-be-processed instruction node, to mark all the parent nodes of the current to-be-processed instruction node as to-be-traversed nodes. In a rendering information updating phase, the electronic device sequentially traverses the to-be-traversed nodes, until a to-be-processed instruction node with a dirty mark is traversed, and determines that the to-be-processed instruction node and all child nodes are the first target node on which rendering information updating needs to be performed, so that rendering information updating can be performed only on the first target node, to reduce a calculation amount caused by updating all nodes.

In a possible implementation, an element on the screen includes a plurality of windows, and the determining a first target node with to-be-updated rendering information in the render tree based on the attribute information includes:
determining, based on the node identifier, whether a window node corresponding to any one of the plurality of windows exists in the node corresponding to the to-be-processed instruction;
if the window node exists in the node corresponding to the to-be-processed instruction, determining, based on the attribute information, whether an occlusion relationship between the plurality of windows changes;
determining a third target node in the render tree based on the attribute information if the occlusion relationship between the plurality of windows does not change, where the third target node is a node corresponding to a completely occluded element on the screen; and
determining the first target node based on the third target node.

In this implementation, before rendering information updating, the electronic device can determine, based on the extracted node identifier, whether the window node exists in the node corresponding to the to-be-processed instruction; if the window node exists, determine, based on the attribute information, whether the occlusion relationship between the plurality of windows changes; and if the occlusion relationship between the plurality of windows does not change, determine that an occlusion relationship between windows in a previous frame can be reused, to avoid repeatedly calculating the occlusion relationship between windows for each frame. When window occlusion can be reused, the electronic device may determine the third target node corresponding to the completely occluded element based on the attribute information, to remove a rendering information updating operation on the third target node, thereby implementing control-level redundancy calculation optimization.

In a possible implementation, the method further includes:
if the window node does not exist in the node corresponding to the to-be-processed instruction, determining that the occlusion relationship between the plurality of windows does not change.

In this implementation, the electronic device determines, based on the node identifier, that the window node does not exist in the node corresponding to the to-be-processed instruction. It indicates that no window node in a current frame needs to be updated. In other words, the occlusion relationship between the plurality of windows does not change, to reuse an occlusion relationship between the plurality of windows in the previous frame.

In a possible implementation, the determining a third target node in the render tree based on the attribute information includes:
if the operation type of the to-be-processed instruction is not a first preset type, determining, based on coordinate information of a target element in a previous frame, whether the target element is completely in an occluded region of a window to which the target element belongs, where the target element is an element that corresponds to the node corresponding to the to-be-processed instruction on the screen; and
if the target element is completely in the occluded region of the window to which the target element belongs, determining that the node corresponding to the to-be-processed instruction is the third target node.

In this implementation, the first preset type is an operation type that affects an element occlusion change corresponding to the node. If the operation type of the to-be-processed instruction is the first preset type, it indicates that an occlusion status of the element corresponding to the node changes, and rendering information updating needs to be performed on the node. If the operation type of the to-be-processed instruction is not the first preset type, it indicates that an occlusion status of the element corresponding to the node does not change. The electronic device may directly reuse the coordinate information of the target element in the previous frame and the occluded region of the window to which the target element belongs, to determine whether the target element is completely occluded, so that an updating operation on a node corresponding to a completely occluded target element can be removed.

In a possible implementation, the to-be-processed instruction includes a to-be-processed sub-instruction corresponding to the window node, the operation type of the to-be-processed instruction includes an operation type of the to-be-processed sub-instruction, and the determining, based on the attribute information, whether an occlusion relationship between the plurality of windows changes includes:
if the operation type of the to-be-processed sub-instruction is not a second preset type, determining that the occlusion relationship between the plurality of windows does not change; and
if the operation type of the to-be-processed sub-instruction is the second preset type, determining that the occlusion relationship between the plurality of windows changes.

In this implementation, the second preset type is an operation type that affects a window occlusion change, for example, scaling, stretching, movement, or a transparency change of a window. If the operation type of the to-be-processed sub-instruction is not the second preset type, it indicates that the occlusion relationship between the plurality of windows does not change, and the occlusion relationship in the previous frame can be reused, to avoid repeated calculation of the occlusion relationship. If the operation type of the to-be-processed sub-instruction is the second preset type, it indicates that the occlusion relationship between the plurality of windows changes, the occlusion relationship needs to be recalculated, and then occlusion determining of the node is performed.

In a possible implementation, the determining the first target node based on the third target node includes:
marking a to-be-processed instruction node in the render tree based on the node identifier;
marking a parent node of the to-be-processed instruction node as a to-be-traversed node;
traversing the to-be-traversed node starting from a root node in the render tree, until the to-be-processed instruction node is traversed; and
determining that the to-be-processed instruction node and a node other than the third target node in a child node of the to-be-processed instruction node is the first target node; or
determining that a node other than the third target node in the render tree is the first target node.

In this implementation, in an instruction parsing phase, the electronic device may quickly index and mark the to-be-processed instruction node in the render tree with reference to the node identifier of the node corresponding to the to-be-processed instruction, and recursively traverse all parent nodes of a current to-be-processed instruction node starting from the current to-be-processed instruction node, to mark all the parent nodes of the current to-be-processed instruction node as to-be-traversed nodes. In a rendering information updating phase, the electronic device sequentially traverses the to-be-traversed nodes, until a to-be-processed instruction node with a dirty mark is traversed, and the third target node is removed from the to-be-processed instruction node and all child nodes of the to-be-processed instruction node, to skip updating of a static node and the completely occluded node. In addition, in this implementation, the static node is first removed, and then the completely occluded third target node is determined from a node other than the static node, to reduce redundant calculation of traversal and node occlusion determining. Alternatively, in the rendering information updating phase, the electronic device may not remove updating of the static node, and skip only updating of the completely occluded node, to still remove redundancy calculation of updating.

In a possible implementation, the method further includes:
determining that a second target node in the render tree is a static node, where the second target node is a node other than the to-be-processed instruction node, the to-be-traversed node, and the child node of the to-be-processed instruction node; and
performing node state resetting on the static node.

In this implementation, for a node, in the render tree, that is neither marked as a to-be-processed instruction node nor marked as a to-be-traversed node and that is not a child node of the to-be-processed instruction node, the electronic device determines the node as a static node on which rendering information updating does not need to be performed, so that an updating operation on such a node can be skipped and removed. Because the node does not need to be updated, the electronic device may reset the current frame to state attribute information of such a node in the previous frame, to reduce an updating calculation operation.

In a possible implementation, the method further includes:
performing node state resetting on the third target node.

In this implementation, because the completely occluded third target node does not need to be updated, the electronic device may reset the current frame to state attribute information of such a node in the previous frame, to reduce an updating calculation operation.

In a possible implementation, the performing node state resetting on the third target node includes:
caching an instruction that is not executed in the third target node.

In this implementation, because the third target node has a to-be-processed instruction, but updating removal is performed on the third target node because the third target node is completely occluded, during node state resetting of such a node, in addition to resetting the current frame to the state attribute information in the previous frame, an instruction that is not executed further needs to be cached, so that when a rendering service is triggered next time and an execution condition is met, a cache instruction that is not processed is executed

In a possible implementation, the to-be-processed instruction includes a cache instruction and a historical cache instruction that are obtained based on an instruction delivered by an application in a current frame.

In this implementation, based on a rendering architecture, not only usable information can be obtained from the instruction delivered by the application in the current frame, but also usable information can be extracted from historical cache instruction of a node. Instruction information extracted from a plurality of places helps the electronic device determine, from the render tree before rendering information updating, the node whose rendering information does not need to be updated.

According to a second aspect, an embodiment of this application provides a rendering apparatus. The apparatus includes an obtaining unit and a processing unit.

The obtaining unit is configured to obtain a to-be-processed instruction corresponding to a node in a render tree. The render tree is a render tree corresponding to a current display interface.

The processing unit is configured to: perform information extraction on the to-be-processed instruction, to obtain attribute information of the to-be-processed instruction; determine a first target node with to-be-updated rendering information in the render tree based on the attribute information, and perform rendering information updating on the first target node, to obtain an updated render tree; and render an element in the current display interface based on the updated render tree.

It should be noted that the second aspect provides the apparatus corresponding to the first aspect, to implement various method steps provided in the first aspect. For specific implementation details and beneficial effects, refer to the first aspect.

According to a third aspect, an embodiment of this application provides an electronic device, including a processor, a storage, and one or more programs. The processor is connected to the storage, the one or more programs are stored in the storage, and when the one or more programs are configured to be executed by the processor, the method in the first aspect is implemented.

According to a fourth aspect, an embodiment of this application provides a chip system, used in an electronic device. The chip system includes one or more processors, and the processor is configured to invoke a computer program, so that the electronic device performs the method in the first aspect.

According to a fifth aspect, an embodiment of this application provides a computer-readable storage medium. The computer-readable storage medium stores a computer program to be executed by an electronic device, and when the computer program is executed, the method in the first aspect is implemented.

According to a sixth aspect, an embodiment of this application provides a computer program product. When the computer program product runs on an electronic device, the electronic device is enabled to perform the method in the first aspect.

### BRIEF DESCRIPTION OF DRAWINGS

To describe the technical solutions in embodiments of this application or in the background more clearly, the following briefly describes the accompanying drawings for describing embodiments of this application or the background.
FIG. 1 is a diagram of a system architecture of a related technology;
FIG. 2 is a schematic flowchart of a related technology;
FIG. 3 is a diagram of a system architecture of another related technology;
FIG. 4 is a schematic flowchart of another related technology;
FIG. 5 is a diagram of a system architecture of another related technology;
FIG. 6 is a schematic flowchart of another related technology;
FIG. 7 is a diagram of a system architecture according to an embodiment of this application;
FIG. 8 is a diagram of a software architecture of an OS window according to an embodiment of this application;
FIG. 9 is a schematic flowchart of a rendering method according to an embodiment of this application;
FIG. 10 is a schematic diagram of a render tree according to an embodiment of this application;
FIG. 11 is a diagram of a to-be-processed instruction node and a to-be-traversed node according to an embodiment of this application;
FIG. 12 is a schematic flowchart of another rendering method according to an embodiment of this application;
FIG. 13 is a diagram of an occlusion relationship between a plurality of windows according to an embodiment of this application;
FIG. 14 is a diagram of a third target node according to an embodiment of this application;
FIG. 15 is a diagram of a structure of a rendering apparatus according to an embodiment of this application; and
FIG. 16 is a schematic diagram of a structure of an electronic device according to an embodiment of this application.

### DESCRIPTION OF EMBODIMENTS

In the specification, claims, and accompanying drawings of this application, the terms "first", "second", "third", "fourth" and so on are intended to distinguish between different objects but do not indicate a particular order. In addition, the terms "including", "having", or any other variant thereof are intended to cover a non-exclusive inclusion. For example, a process, a method, a system, a product, or a device that includes a series of steps or units is not limited to the listed steps or units, but optionally further includes unlisted steps or units, or optionally further includes other inherent steps or units of the process, the method, the product, or the device.

An "embodiment" mentioned in this specification means that a particular feature, structure, or characteristic described with reference to this embodiment may be included in at least one embodiment of this application. The phrase appear at various locations in this specification may neither necessarily mean a same embodiment, nor mean an independent or optional embodiment exclusive from another embodiment. It is explicitly and implicitly understood by persons skilled in the art that embodiments described in this specification may be combined with another embodiment.

Terms such as "component", "module", and "system" used in this specification indicate computer-related entities, hardware, firmware, combinations of hardware and software, software, or software being executed. For example, the component may be but is not limited to a process that runs on a processor, the processor, an object, an executable file, an execution thread, a program, and/or a computer. As illustrated by using figures, both a terminal device and an application that runs on the terminal device may be components. One or more components may reside within the process and/or the execution thread, and the component may be located on one computer and/or distributed between two or more computers. In addition, these components may be executed from various computer-readable media that store various data structures. For example, the components may communicate by using a local and/or remote process and based on a signal having one or more data packets (for example, data from two components interacting with another component in a local system, a distributed system, and/or across a network such as the internet interacting with another system by using the signal).

Some terms in this application are first explained and described, to facilitate understanding of persons skilled in the art.
(1) An Android open source project (Android Open Source Project, AOSP) is a mobile phone operating system project open-sourced by Google, and is usually "Android operating system".
(2) An Apple mobile operating system (iPhone operating system, iOS) is a proprietary mobile operating system developed by Apple for a mobile device of Apple.
(3) A graphics user interface (Graphics User Interface, GUI) is a visual computer environment in which a program, a file, and an option are displayed by using graphic images (for example, an icon, a menu, and a dialog box) on a screen.
(4) An application (Application, App), namely, an application program, is software that provides a function required by a service. One application corresponds to one process.
(5) A window is a basic unit specified by an application in a graphics user interface to display data. A plurality of windows may be created for one application, and one window includes a plurality of controls.
(6) A control is encapsulation of data and a method. A visible control is a button in a window.
(7) A layer is a memory that stores some rendering results based on a system design. Generally, the layer is like a film that includes an element such as a text or a graph. Each layer includes a plurality of pixels, and layers are superimposed to form an entire image.
(8) A render tree stores, in a tree structure, information required for rendering an application element. All trees store different information amounts based on a system architecture design (a specific form may be a single window, a single application, all applications on a single screen, or all applications on a plurality of screens).
(9) A render tree node stores an abstract data structure of an application element. Common categories include a screen node, a window node, a control node, and the like.
(10) A node identifier identifies a number of a rendered node.
(11) (Rendering) dirty region is a part that needs to be redrawn due to rendering.
(12) Window occlusion: A partial region of a window at a lower layer is completely invisible due to window stacking. In other words, the window at the lower layer is occluded. Because a transparent rendering effect can be set for an application and a control of the application, an application window stacking region is not a real "occluded" region.
(13) A drawing instruction is an instruction delivered by an application to a rendering server. The server needs to parse the instruction before executing the instruction.
(14) Drawing instruction parsing is drawing instruction data decoding and logic operation processing, and an instruction drawing operation is not really performed.
(15) Instruction playback is instruction processing, and an instruction that needs to be further processed is stored and forwarded.
(16) An instruction delivery is to forward an instruction to a corresponding processing unit.
(17) A graphics processing unit (graphics processing unit, GPU), also referred to as a display core, a visual processor, or a display chip, is a microprocessor that specifically performs image and graph-related operations on a personal computer, a workstation, a game machine, and some mobile devices (such as a tablet computer and a smartphone).

To facilitate understanding of embodiments of this application, and further analyze and provide a technical problem to be specifically resolved in this application, the following briefly describes related technical solutions of this application.

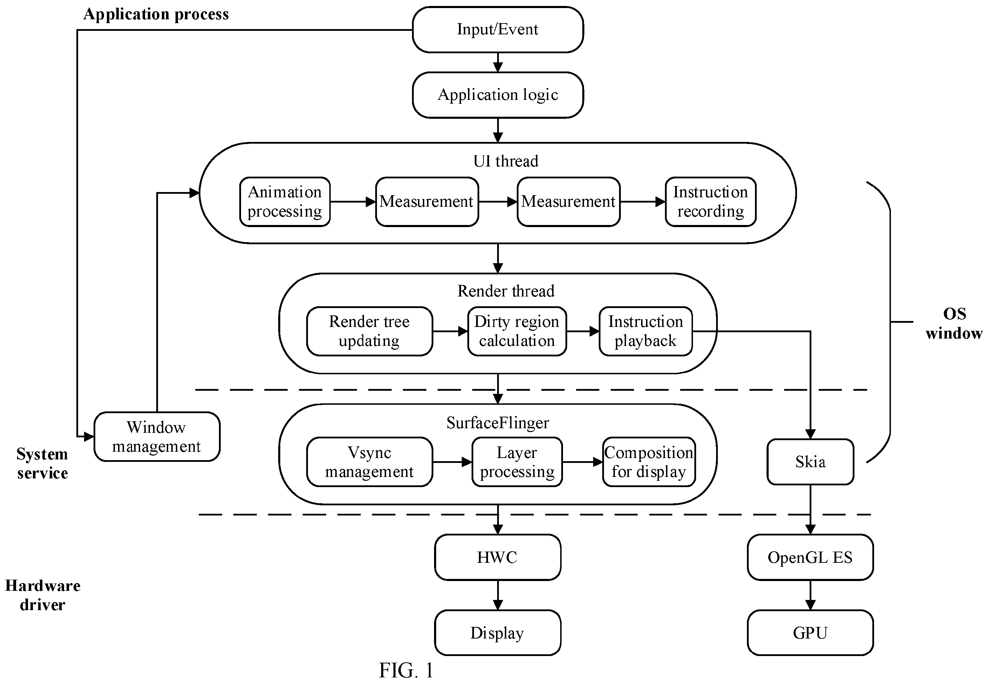

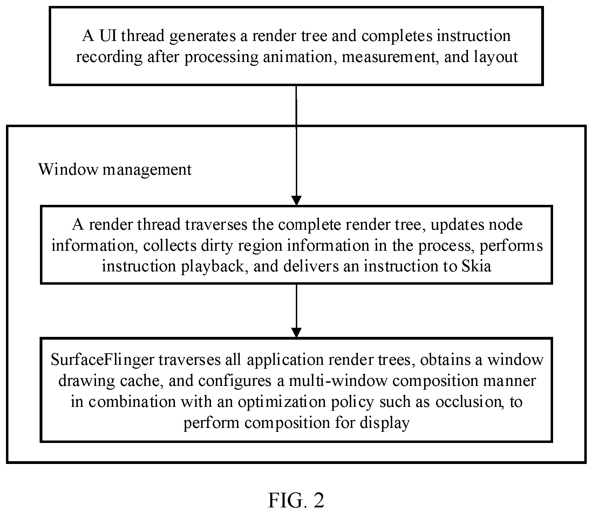

FIG. 1 is a diagram of a system architecture of a related technology. In the system architecture shown in FIG. 1, an operating system (Operating system, OS) window part provides a main rendering framework of Android. AOSP uses a "separate rendering" manner. To be specific, an application with an input/event starts a new UI thread. The UI thread performs operations such as animation processing, measurement, layout, render tree generation, and instruction recording. After all the corresponding operations are processed, an instruction is delivered to a corresponding render thread. The render thread performs operations such as render tree updating, dirty region calculation, and instruction playback, to complete application rendering and drawing, and store a result in a corresponding cache. SurfaceFlinger (a service process of an Android graphics architecture) may traverse and obtain all window drawing caches, complete window drawing in combination with an optimization policy such as occlusion, and finally perform composition for display. Based on the system architecture shown in FIG. 1, as shown in FIG. 2, a rendering procedure in a related technology may be described as follows:
Step 1: (The UI thread) generates a render tree and completes instruction recording after processing animation, measurement, and layout.
Step 2: (The render thread) traverses the complete render tree, updates node information, collects dirty region information (for clipping and optimization of the drawing instruction) in the process, performs instruction playback, and delivers an instruction to Skia (a 2-dimensional vector graphics processing function library, where the AOSP uses Skia for drawing processing, and works with OpenGL ES and a specific hardware feature, to enhance a display effect).
Step 3: (SurfaceFlinger) traverses all application render trees, obtains a window drawing cache, and configures a multi-window composition manner in combination with the optimization policy such as occlusion, to perform composition for display.

It can be learned that, in a rendering method shown in FIG. 2, rendering and drawing updating of the application with an input/event is processed, to reduce traversal updating of a static application. However, a render thread of such an application does not perform node pruning on the render tree, and does not perform optimization processing in a render information updating phase based on information extracted from the drawing instruction. Consequently, there is still a large amount of redundant calculation for a static node in the application.

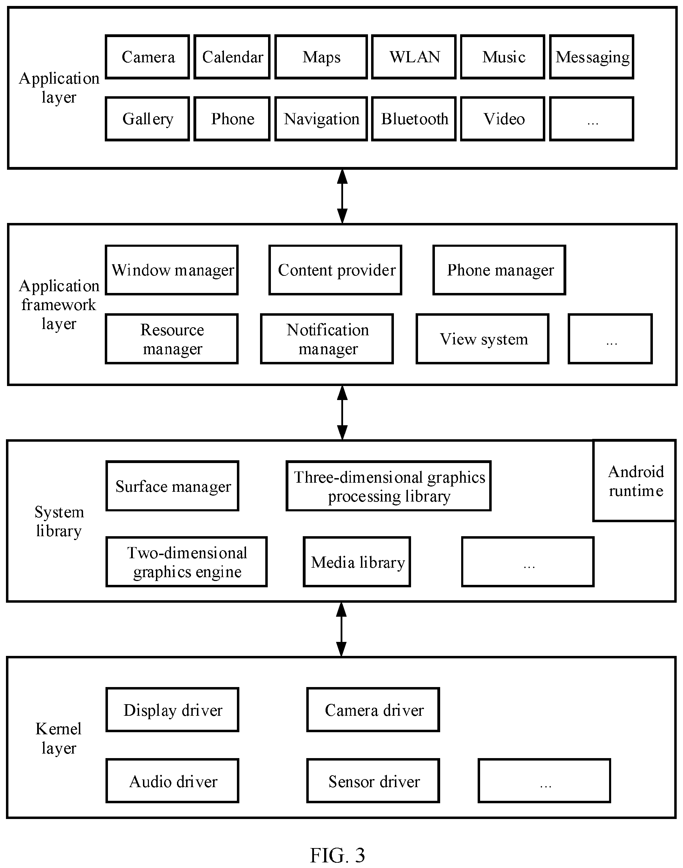

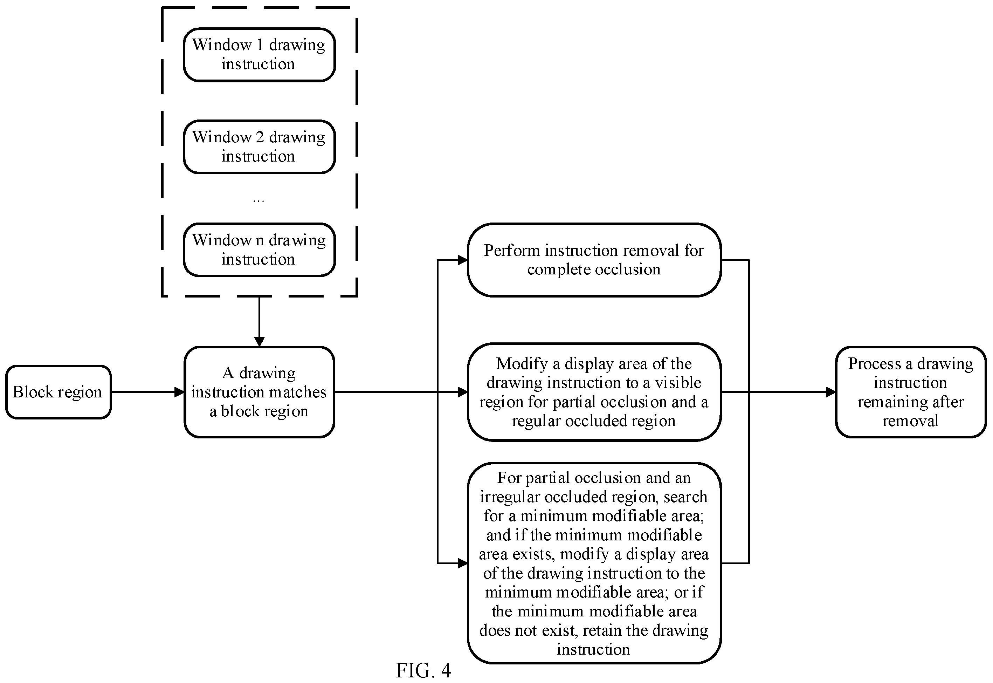

FIG. 3 is a diagram of a system architecture of another related technology. In the architecture shown in FIG. 3, software is divided into several layers, and the layers communicate with each other through a software interface. As shown in FIG. 3, an entire system is divided into an application layer, an application framework layer, a system library, and a kernel layer. Based on the system architecture, the related technology further optimizes an Android rendering process, to perform virtual blocking on a screen in advance, obtain a window occlusion relationship in a window rendering and composition pipeline, determine whether a visible region of an incompletely occluded window is regular, and perform corresponding optimization processing with reference to virtual blocking on the screen. Based on the system architecture shown in FIG. 3, as shown in FIG. 4, a rendering procedure in a related technology may be described as follows:
Step 1: Perform virtual blocking and partitioning on a display in advance.
Step 2: Store window drawing instructions in partitions through matching.
Step 3: Determine a window occlusion state based on a window rendering updating calculation result before rendering and composition performed by a GPU, specifically including:
   performing instruction removal for complete occlusion;
   modifying a display area of the drawing instruction to a visible region for partial occlusion and a regular occluded region; and
   for partial occlusion and an irregular occluded region, searching for a minimum modifiable area; and if the minimum modifiable area exists, modifying a display area of the drawing instruction to the minimum modifiable area; or if the minimum modifiable area does not exist, retaining the drawing instruction.
Step 4: Process a drawing instruction remaining after removal.

It can be learned that, in a rendering method shown in FIG. 4, a window partial occlusion optimization policy is subdivided through virtual partitioning of screen regions based on an original window occlusion policy, to reduce redundant drawing of a partially occluded window. However, occlusion determining and instruction pruning remain at a window level, control-level node occlusion determining and pruning are not performed, the optimization policy does not involve updating calculation before a drawing phase, and a redundant calculation instruction in a rendering information updating phase cannot be removed.

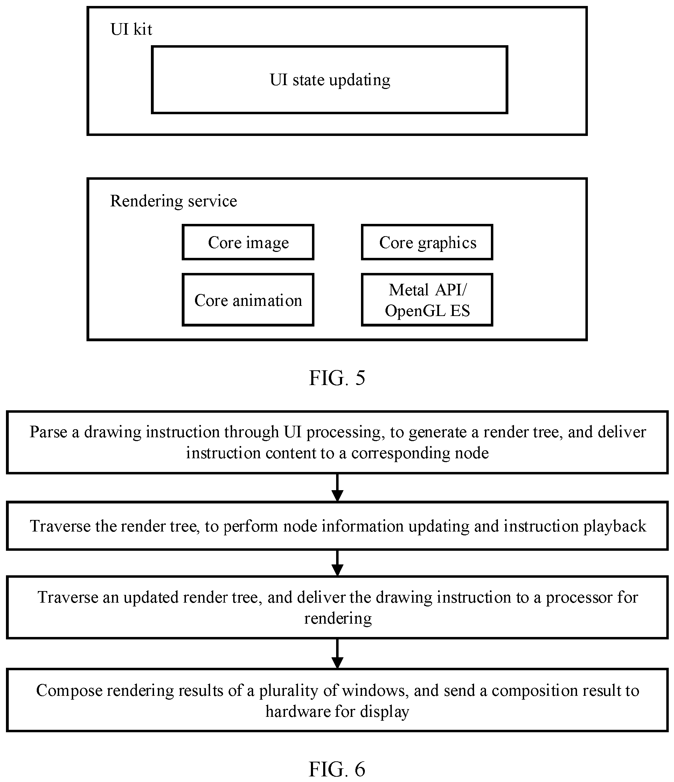

FIG. 5 is a diagram of a system architecture of another related technology. An iOS rendering architecture shown in FIG. 5 provides a front-end framework UI Kit and a rendering service. The UI Kit updates a front-end UI state, and the rendering service provides an image processing framework Core Image, a drawing engine Core Graphics, an animation library Core Animation, and an interface Metal API/OpenGL ES invoked for GPU rendering and calculation. Based on the system architecture shown in FIG. 5, as shown in FIG. 6, a rendering procedure in a related technology may be described as follows:
Step 1: Parse a drawing instruction through UI processing, to generate a render tree, and deliver instruction content to a corresponding node.
Step 2: Traverse the render tree, to perform node information updating and instruction playback.
Step 3: Traverse an updated render tree, and deliver the drawing instruction to a processor for rendering.
Step 4: Compose rendering results of a plurality of windows, and send a composition result to hardware for display.

It can be learned that, in a rendering method shown in FIG. 6, information extraction is not performed on the rendering instruction before rendering information updating, and updating optimization processing is not performed based on extracted information in a rendering information updating phase. There is a large amount of redundant calculation for rendering information updating of a render tree node.

It should be understood that, in a process in which a system performs frame refreshing, all nodes in the generated render tree need to be traversed for node rendering information updating, but real-time refreshing does not need to be performed for all nodes (for example, a window is static, or a control is completely occluded). In most existing rendering architecture solutions, for a render tree obtained after information updating, a drawing instruction is pruned by using a dirty region or through occlusion determining, but neither instruction pruning nor updating optimization is performed in a render tree information updating phase.

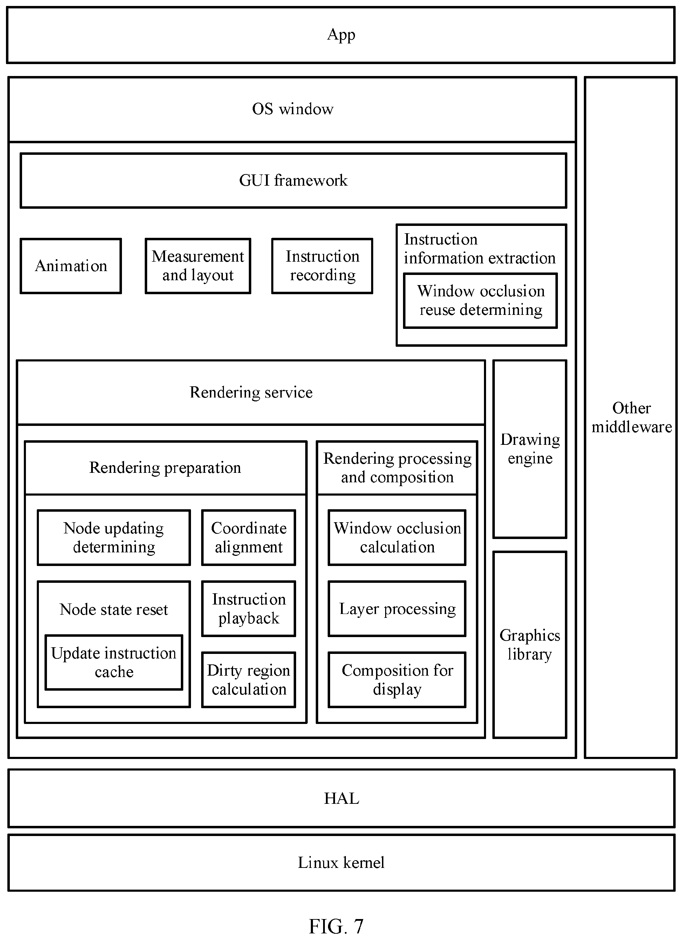

Based on disadvantages in a related technology, an embodiment of this application provides a rendering method. The method may be implemented based on the system architecture shown in FIG. 7. As shown in FIG. 7, the system architecture mainly includes an app, an OS window, a hardware abstraction layer (Hardware Abstraction Layer, HAL), a Linux kernel, and some other middleware. The HAL is an interface layer located between an operating system kernel and a hardware circuit, and aims to abstract hardware. A low coupling feature of the OS window makes the architecture universal, and may be used to optimize a "rendering and composition" phase of a mainstream rendering architecture. The OS window part is a core rendering architecture provided in this embodiment of this application. In addition to main functional modules such as "GUI framework", "Animation", "Measurement and layout", "Instruction recording", "Coordinate alignment", "Instruction playback", "Dirty region calculation", "Drawing engine", "Graphics library", and "Rendering processing and composition", an instruction information extraction function and a window occlusion reuse determining function are added in the OS window in a UI processing phase. Information extraction is performed on a to-be-processed instruction in an instruction parsing process ("Animation", "Measurement and layout", and "Instruction recording") of a step before rendering and composition, and window occlusion reuse determining is performed based on extracted information. Functions such as "node updating determining" and "Node state reset" (including "Update instruction cache") are added to a rendering service in a rendering preparation phase. Specifically, through node updating determining, a node on which rendering information updating needs to be performed and a node on which rendering information updating does not need to be performed in a current frame in a render tree can be determined based on extracted instruction information, to remove updating calculation of the node on which rendering information updating does not need to be performed.

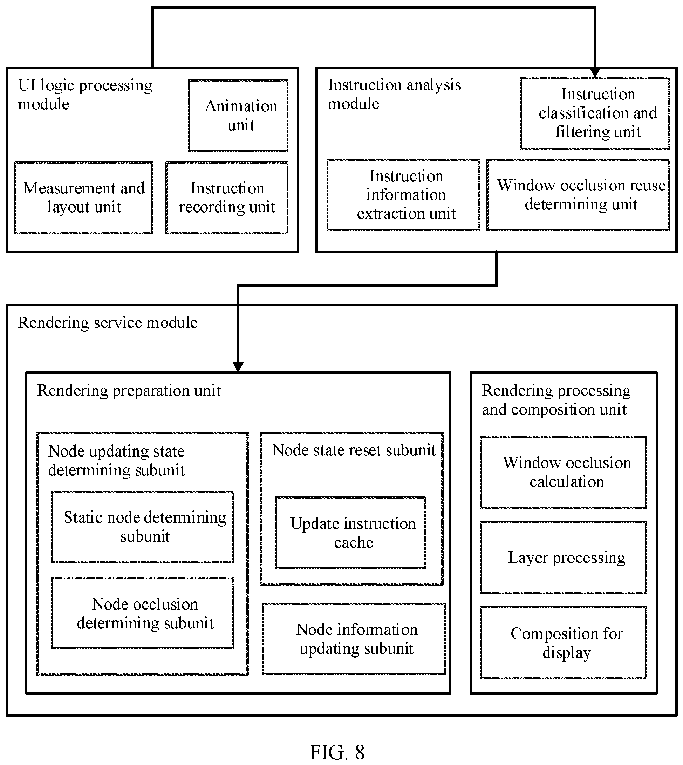

The following describes in detail the system architecture shown in FIG. 7 with reference to FIG. 8. FIG. 8 is a diagram of a software architecture of an OS window according to an embodiment of this application. As shown in FIG. 8, the software architecture includes a UI logic processing module, an instruction analysis module, and a rendering service module.

The UI logic processing module includes an animation unit, a measurement and layout unit, and an instruction recording unit in an instruction parsing phase. Same as an existing rendering architecture, the UI logic processing module is configured to process animation, measurement and layout, generate a render tree, and complete instruction recording.

The instruction analysis module includes an instruction classification and filtering unit, an instruction information extraction unit, and a window occlusion reuse determining unit. The instruction classification and filtering unit is configured to collect a to-be-processed instruction in an instruction parsing process of the UI logic processing module. For example, an update instruction, a node attribute update instruction, an animation instruction, and the like of a self-drawn SurfaceView node may be collected. The instruction information extraction unit is configured to perform information extraction on the to-be-processed instruction collected by the instruction classification and filtering unit. In an extraction process, whether a window node exists in a node corresponding to the to-be-processed instruction is determined based on extracted instruction information. The window occlusion reuse determining unit is configured to update an occlusion reuse status of a window in a current display interface based on a determining result and the extracted instruction information of the instruction information extraction unit. Then, the instruction analysis module delivers the extracted instruction information to the rendering service module for use.

The rendering service module includes a rendering preparation unit and a rendering processing and composition unit. The rendering preparation unit includes a node updating state determining subunit, a node state reset subunit, and a node information updating subunit. The node updating state determining subunit includes a static node determining subunit and a node occlusion determining subunit. The static node determining subunit determines, based on the extracted instruction information (for example, a node identifier), whether the node in the render tree is static (having no to-be-processed instruction), to determine a static node on which rendering information updating does not need to be updated. The node occlusion determining subunit performs occlusion determining on an element (for example, a control) corresponding to a non-static node when window occlusion can be reused. The node state reset subunit performs node state resetting on the static node and a completely occluded node. Node state resetting on the completely occluded node further includes updating an instruction cache of such a node, to cache an instruction that is not executed in a current frame. The node information updating subunit is configured to perform an updating operation on the node whose rendering information needs to be updated and that is determined by the node updating state determining subunit, to obtain a traversed and updated render tree. The rendering processing and composition unit is configured to perform window occlusion calculation, layer processing, and composition for display operations based on the traversed and updated render tree. It should be understood that, when window occlusion can be reused, occluded region information of each window in a previous frame can be used for window occlusion calculation, to reduce a workload of window occlusion calculation.

The following describes the technical solutions provided in this application in detail with reference to specific implementations.

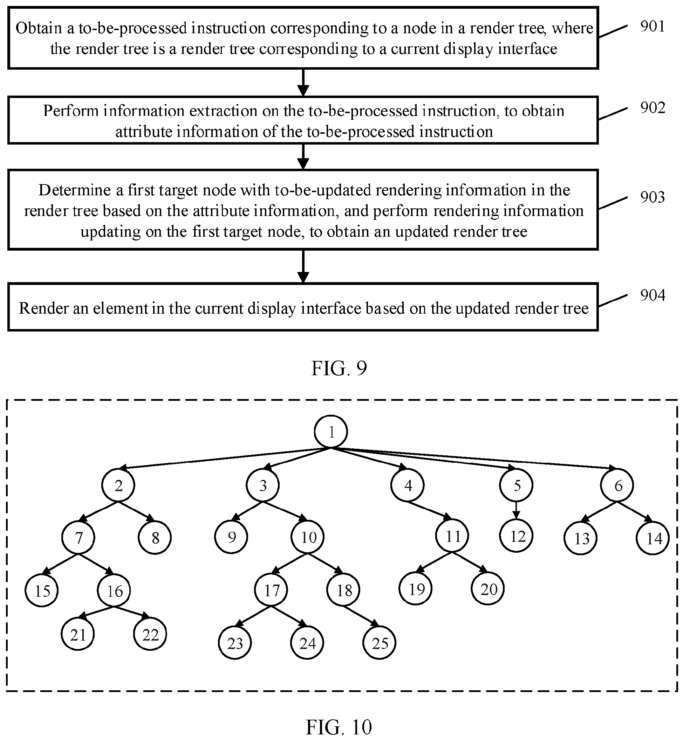

FIG. 9 is a schematic flowchart of a rendering method according to an embodiment of this application. The rendering method may be performed by an electronic device (for example, a mobile phone or a computer), and is used to render and display an element on a screen. The rendering method includes but is not limited to the following steps or operations:
901: Obtain a to-be-processed instruction corresponding to a node in a render tree, where the render tree is a render tree corresponding to a current display interface.

In this embodiment of this application, when an instruction delivered by an application is parsed through UI processing, a render tree is generated. Nodes in the render tree are in a one-to-one correspondence with elements in the current display interface. For example, the elements in the current display interface may be a window, a control, and the like, including a visible element and an invisible element (for example, an occluded element). In a render tree shown in FIG. 10, a root node 1 abstracts the current display interface. If there are five windows (corresponding to at least one application) in the current display interface, a node 2 to a node 6 (window nodes) are abstractions of the five windows, and child nodes of the window nodes represent abstractions of elements in the five windows, for example, controls or elements at a finer granularity than the control. The window may be a status bar, a navigation bar, an application window, or the like.

For example, the to-be-processed instruction includes a cache instruction and a historical cache instruction that are obtained based on an instruction delivered by an application in a current frame. The instruction delivered by the application in the current frame includes but is not limited to an update instruction, a node attribute update instruction, and an animation instruction (for example, may also be summarized as a drawing instruction, a layer operation instruction, and an animation instruction) of a self-drawn SurfaceView node. A UI processing and rendering service parses these instructions layer by layer, and caches instruction information obtained through parsing to a corresponding node. The historical cache instruction is an instruction that is not executed in a node, for example, animation and a special effect. It is assumed that the rendering service delivers an animation instruction to a node in a previous frame. Because the animation instruction usually lasts for a plurality of frames, the node still has a cached animation instruction in the current frame.

In this implementation, based on a rendering architecture, not only usable information can be obtained from the instruction delivered by the application in the current frame, but also usable information can be extracted from historical cache instruction of a node. Instruction information extracted from a plurality of places helps the electronic device determine, from the render tree before rendering information updating, a node whose rendering information does not need to be updated.

902: Perform information extraction on the to-be-processed instruction, to obtain attribute information of the to-be-processed instruction.

In this embodiment of this application, in an instruction parsing process, the electronic device extracts information from the collected to-be-processed instruction, to obtain usable attribute information. For example, the attribute information may include a node identifier of a node corresponding to the to-be-processed instruction, a process number of the to-be-processed instruction, an operation type of the to-be-processed instruction, and the like.

903: Determine a first target node with to-be-updated rendering information in the render tree based on the attribute information, and perform rendering information updating on the first target node, to obtain an updated render tree.

It should be understood that a change of a single node in the render tree does not need to trigger re-updating of all nodes. As shown in FIG. 10, a first window (node 2) includes only one to-be-processed instruction node (node 16), all child nodes of the to-be-processed instruction node need to be updated, and all parent nodes of the to-be-processed instruction node need to be traversed. However, some sibling nodes of the to-be-processed instruction node and sibling nodes of the parent nodes actually do not need to be updated, for example, a node 8 and a node 15.

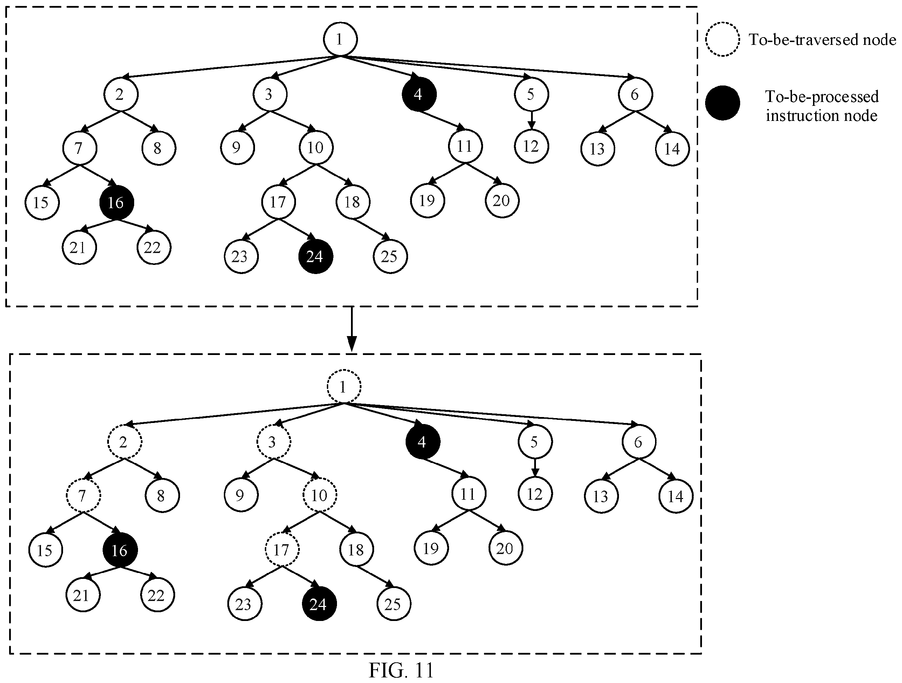

For example, in an instruction parsing phase, the electronic device may perform quick indexing based on the extracted node identifier, determine a to-be-processed instruction node whose rendering information (for example, the rendering information may be information such as a color, a size, coordinates, and transparency of an element corresponding to the node) needs to be updated in the render tree, mark the to-be-processed instruction node, and recursively traverse all parent nodes (for example, a parent node at an upper layer of the to-be-processed instruction node, and a parent node of the parent node) of the to-be-processed instruction node starting from the to-be-processed instruction node until a root node, mark all the parent nodes of the to-be-processed instruction node as to-be-traversed nodes. It should be understood that a node marked as a to-be-traversed node may not have a to-be-processed instruction in the current frame. Therefore, to traverse the to-be-processed instruction node, such a node needs to be traversed, but rendering information updating may not need to be performed on such a node. It should be noted that a node marked as a node that needs to be traversed does not need to be traversed repeatedly. To be specific, when a parent node that needs to be traversed is marked starting from the to-be-processed instruction node, if the parent node is marked, traversal of all parent nodes of a current to-be-processed instruction node may be finished in advance, because the parent nodes are marked by another to-be-processed instruction node. As shown in FIG. 11, if a node 4, a node 16, and a node 24 in FIG. 10 are to-be-processed instruction nodes, a node 1, a node 2, a node 7, a node 3, a node 10, and a node 17 are all marked as to-be-traversed nodes. In a rendering information updating phase, the electronic device sequentially traverses to-be-traversed nodes starting from the root node, until a to-be-processed instruction node with a dirty mark is traversed, and determines that the to-be-processed instruction node and all child nodes are the first target node on which rendering information updating needs to be performed. In this case, another node in the render tree is a static node whose rendering information does not need to be updated. The electronic device updates and calculates the rendering information of the first target node, and skips updating the static node.

In this implementation, in the instruction parsing phase, the electronic device may quickly index and mark the to-be-processed instruction node in the render tree with reference to the node identifier of the node corresponding to the to-be-processed instruction, and sequentially traverse all parent nodes of a current to-be-processed instruction node starting from the current to-be-processed instruction node, to mark all the parent nodes of the current to-be-processed instruction node as to-be-traversed nodes. In the rendering information updating phase, the electronic device sequentially traverses the to-be-traversed nodes, until the to-be-processed instruction node with the dirty mark is traversed, and determines that the to-be-processed instruction node and all the child nodes are the first target node on which rendering information updating needs to be performed, so that rendering information updating can be performed only on the first target node, to reduce a calculation amount caused by updating all nodes.

For example, the electronic device may further determine a completely occluded node in the render tree with reference to the operation type and the node identifier of the to-be-processed instruction, and determine a node other than the completely occluded node as the first target node, to skip updating of the completely occluded node.

For example, the electronic device may further determine the completely occluded node from the to-be-processed instruction node and all the child nodes of the to-be-processed instruction node with reference to the operation type and the node identifier of the to-be-processed instruction, and determine that an incompletely occluded node in the to-be-processed instruction node and all the child nodes of the to-be-processed instruction node is the first target node, to skip updating of the static node and the completely occluded node.

For example, the static node includes a static window node. After marking the to-be-processed instruction node based on the node identifier corresponding to the to-be-processed instruction, the electronic device may determine the static window node in the render tree, to skip updating of the static window node. That is, the static node may be optimized at a window level, or at a child node level at a finer granularity.

904: Render the element in the current display interface based on the updated render tree.

In this embodiment of this application, the electronic device performs, based on the updated render tree, processing such as dirty region calculation, instruction playback, window occlusion calculation, layer processing, and composition for display, to complete rendering of the element in the current display interface, so as to present an image in the current frame to a user. For example, the electronic device generates a rendering instruction based on the updated render tree, and submits the rendering instruction to a GPU. The GPU executes the rendering instruction, to render the element in the current display interface, and an interface obtained after rendering is completed is displayed on a screen. It should be noted that the rendering instruction may be executed by using the GPU, or may be executed by using another processor. This is not limited in this application.

It can be learned that, in this embodiment of this application, before rendering information updating, the electronic device may extract the usable attribute information from the to-be-processed instruction, and determine, based on the attribute information, the first target node whose rendering information needs to be updated and the node whose rendering information does not need to be updated in the render tree, so that an updating operation on the node whose rendering information does not need to be updated can be removed in the rendering information updating phase, to reduce redundant calculation caused by performing rendering information updating on such a node, and implement instruction pruning of the render tree. The electronic device only needs to update the first target node, and renders the element in the current display interface based on the updated render tree. A large amount of redundant calculation is removed, to reduce a calculation amount of rendering information updating, reduce a rendering time, reduce device power consumption, and improve rendering performance.

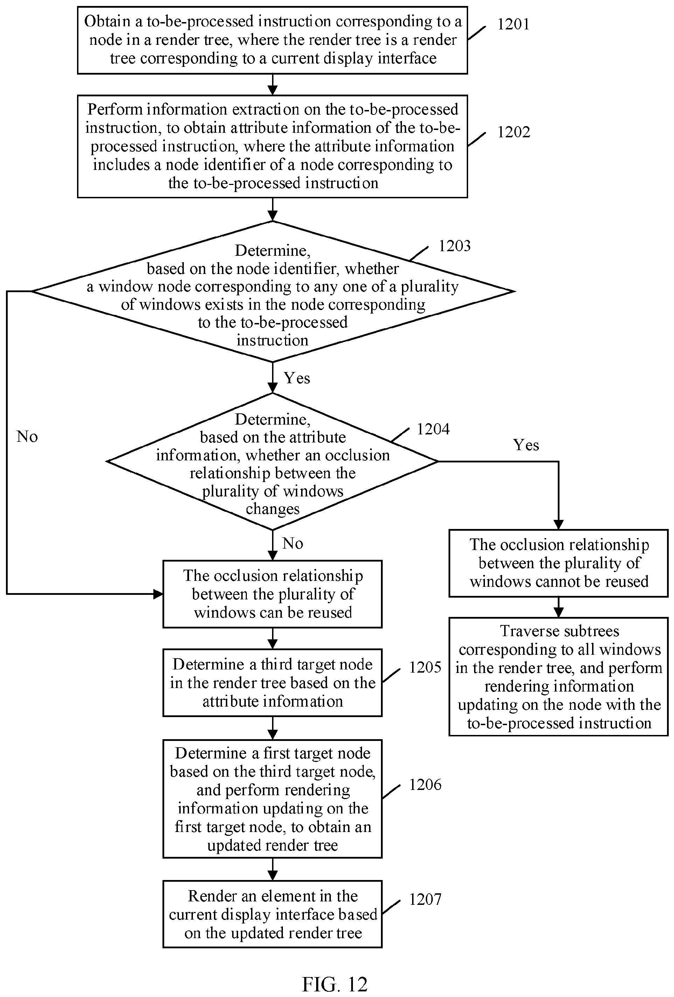

FIG. 12 is a schematic flowchart of another rendering method according to an embodiment of this application. The rendering method includes but is not limited to the following steps or operations:
1201: Obtain a to-be-processed instruction corresponding to a node in a render tree, where the render tree is a render tree corresponding to a current display interface.

The current display interface includes a plurality of windows, and each window has a one-to-one corresponding window node in the render tree.

1202: Perform information extraction on the to-be-processed instruction, to obtain attribute information of the to-be-processed instruction, where the attribute information includes a node identifier of a node corresponding to the to-be-processed instruction.

1203: Determine, based on the node identifier, whether a window node corresponding to any one of the plurality of windows exists in the node corresponding to the to-be-processed instruction.

In this embodiment of this application, before a rendering information updating phase, an electronic device can determine whether the window node corresponding to any one of the plurality of windows exists in the node corresponding to the to-be-processed instruction. For example, if a node identifier of any one of the node 2 to the node 6 shown in FIG. 10 does not exist in the extracted node identifier, it may be determined that the window node does not exist in the node corresponding to the to-be-processed instruction; or if a node identifier of any one of the node 2 to the node 6 shown in FIG. 10 exists in the extracted node identifier, it may be determined that the window node exists in the node corresponding to the to-be-processed instruction. If the window node exists, step 1204 is performed; or if the window node does not exist, it is determined that an occlusion relationship between the plurality of windows does not change, that is, it indicates that the occlusion relationship between the plurality of windows can be reused, and step 1205 is performed.

1204: Determine, based on the attribute information, whether the occlusion relationship between the plurality of windows changes.

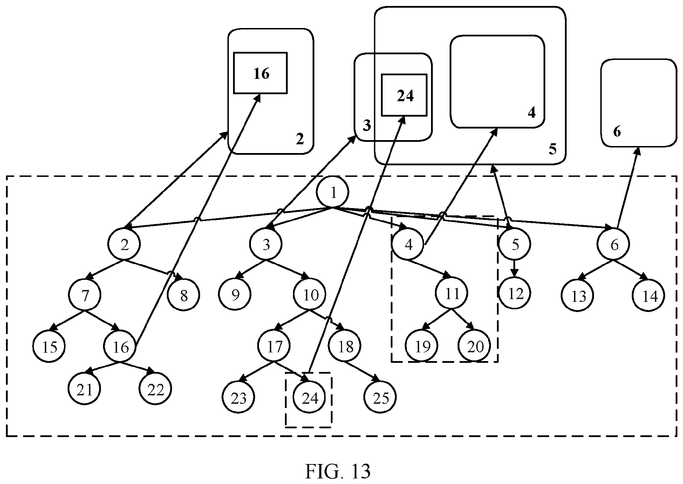

In this embodiment of this application, as shown in FIG. 13, in a Z-axis sequence, a window 5 is displayed at an uppermost layer and is a static window (actually nontransparent), and a window 3 and a window 4 are located below the window 5. In this case, an occluded region of the node 4 is the window 4; the window 3 is partially occluded, and an occluded region of the window 3 is a region falling within the window 5; and a window 2 and a window 6 are not occluded by any window. An element corresponding to a node 24 is actually invisible because the element falls within the occluded region of the window 3. An element corresponding to a node 16 is actually visible because the window 2 is set to be transparent. Each node in the render tree records an occluded region of an element corresponding to the node (an occluded region of the window 2 is empty).

If the occlusion relationship between the plurality of windows does not change, it indicates that the occlusion relationship between the plurality of windows can be reused, and step 1205 is performed.

For example, if the node corresponding to the to-be-processed instruction includes a window node, the to-be-processed instruction includes a to-be-processed sub-instruction corresponding to the window node, and the to-be-processed sub-instruction has a corresponding operation type, the determining, based on the attribute information, whether the occlusion relationship between the plurality of windows changes includes:
if the operation type of the to-be-processed sub-instruction is not a second preset type, determining that the occlusion relationship between the plurality of windows does not change; and
if the operation type of the to-be-processed sub-instruction is the second preset type, determining that the occlusion relationship between the plurality of windows changes.

The second preset type is an operation type that affects a window occlusion change, for example, scaling, stretching, movement, or a transparency change of a window. In this embodiment of this application, an operation type list that affects the window occlusion change is preset, and the list stores the second preset type of the instruction. The electronic device matches the operation type of the to-be-processed sub-instruction with the list, to determine whether the operation type of the to-be-processed sub-instruction is the second preset type. If the window node is a node 3, and an operation type of a to-be-processed sub-instruction of the node 3 is movement, it indicates that the occlusion relationship between the plurality of windows changes. If the operation type of the to-be-processed sub-instruction of the node 3 is not any second preset type in the list, it indicates that the occlusion relationship between the plurality of windows does not change.

In this implementation, if the operation type of the to-be-processed sub-instruction is not the second preset type, it indicates that the occlusion relationship between the plurality of windows does not change, and the occlusion relationship in the previous frame can be reused, to avoid repeated calculation of the occlusion relationship. If the operation type of the to-be-processed sub-instruction is the second preset type, it indicates that the occlusion relationship between the plurality of windows changes, the occlusion relationship needs to be recalculated, and then occlusion determining of the node is performed.

1205: Determine a third target node in the render tree based on the attribute information.

In this embodiment of this application, the third target node is a node corresponding to a completely occluded element on the rendering screen.

For example, the determining a third target node in the render tree based on the attribute information includes:
if the operation type of the to-be-processed instruction is not a first preset type, determining, based on coordinate information of a target element in a previous frame, whether the target element is completely in an occluded region of a window to which the target element belongs, where the target element is an element that corresponds to the node corresponding to the to-be-processed instruction on the screen; and
if the target element is completely in the occluded region of the window to which the target element belongs, determining that the node corresponding to the to-be-processed instruction is the third target node.

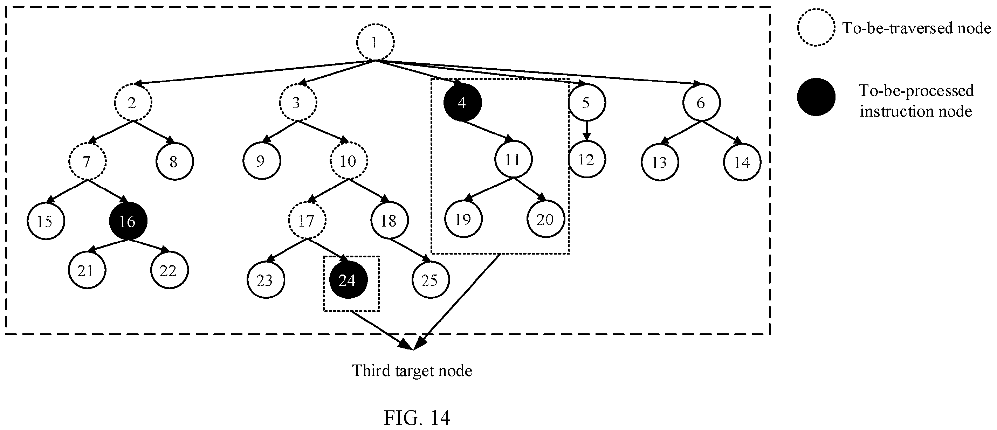

Specifically, the first preset type is an operation type that affects a node occlusion change, for example, scaling or stretching. In this embodiment of this application, an operation type list that affects the node occlusion change is preset. The list stores the first preset type of the instruction. In the rendering information updating phase, the electronic device traverses the node in the render tree. If a node (for example, the node 24) has a to-be-processed instruction, an operation type of the to-be-processed instruction of the node is matched with the operation type list that affects the node occlusion change. If the operation type of the to-be-processed instruction of the node is any first preset type in the list, it indicates that an element occlusion status corresponding to the node changes. In this case, it is determined that rendering information updating needs to be performed on the node, and then a child node of the node is traversed, until all child nodes of the node are traversed or a child node whose corresponding operation type is not the first preset type is traversed. If the operation type of the to-be-processed instruction of the node 24 is not any first preset type in the operation type list that affects the node occlusion change, it indicates that coordinate information of a target element (for example, a region in which a control in the window 3 is located) corresponding to the node 24 in a previous frame can be reused, and the electronic device may determine, based on the coordinate information of the target element in the previous frame, a region in which a control corresponding to the node 24 is located. If the region is completely in the occluded region of the window 3, it may be determined that the control corresponding to the node 24 is completely occluded, and the node 24 is the third target node. For example, for a completely occluded node, if the node has a child node, the child node is also completely occluded. Therefore, the child node of the node is also the third target node, and the child node of the node is not traversed. As shown in FIG. 14, the node 24, the node 4, a node 11, a node 19, and a node 20 in the render tree are all completely occluded third target nodes. For the determined third target node, the electronic device may skip updating of such a node.

In this implementation, if the operation type of the to-be-processed instruction is not the first preset type, it indicates that an occlusion status of the element corresponding to the node does not change. The electronic device may directly reuse the coordinate information of the target element in the previous frame and the occluded region of the window to which the target element belongs, to determine whether the target element is completely occluded, so that an updating operation on a node corresponding to a completely occluded target element can be removed.

1206: Determine a first target node based on the third target node, and perform rendering information updating on the first target node, to obtain an updated render tree.

1207: Render the element in the current display interface based on the updated render tree.

In this embodiment of this application, for example, the electronic device may determine, in the rendering information updating phase, that a node other than the third target node in the render tree is the first target node. In other words, the electronic device may skip updating of the third target node. Compared with a solution in which all nodes are updated, in this case, a calculation amount is reduced.

For example, the determining a first target node based on the third target node includes:
marking a to-be-processed instruction node in the render tree based on the node identifier;
marking a parent node of the to-be-processed instruction node as a to-be-traversed node;
traversing the to-be-traversed node starting from a root node in the render tree, until the to-be-processed instruction node is traversed; and
determining that the to-be-processed instruction node and a node other than the third target node in a child node of the to-be-processed instruction node is the first target node.

In this implementation, in an instruction parsing phase, the electronic device may quickly index and mark the to-be-processed instruction node in the render tree with reference to the node identifier of the node corresponding to the to-be-processed instruction, and recursively traverse all parent nodes of a current to-be-processed instruction node starting from the current to-be-processed instruction node, to mark all the parent nodes of the current to-be-processed instruction node as to-be-traversed nodes. In the rendering information updating phase, the electronic device sequentially traverses the to-be-traversed nodes, until a to-be-processed instruction node with a dirty mark is traversed, and the third target node is removed from the to-be-processed instruction node and all child nodes of the to-be-processed instruction node, to skip updating of a static node and the completely occluded node. In addition, in this implementation, the static node is first removed, and then the completely occluded third target node is determined from a node other than the static node, to reduce redundant calculation of traversal and node occlusion determining. Alternatively, in the rendering information updating phase, the electronic device may not remove updating of the static node, and skip only updating of the completely occluded node, to still remove redundancy calculation of updating.

It can be learned that in this embodiment of this application, before rendering information updating, the electronic device can determine, based on the extracted node identifier, whether the window node exists in the node corresponding to the to-be-processed instruction; if the window node exists, determine, based on the attribute information, whether the occlusion relationship between the plurality of windows changes; and if the occlusion relationship between the plurality of windows does not change, determine that an occlusion relationship between windows in a previous frame can be reused, to avoid repeatedly calculating the occlusion relationship between windows for each frame. When window occlusion can be reused, the electronic device may determine the third target node corresponding to the completely occluded element based on the attribute information, to remove a rendering information updating operation on the third target node, thereby implementing control-level redundancy calculation optimization. In a multi-window scenario, there are a large quantity of occluded controls and windows. In this scenario, updating of the completely occluded node is reduced, to reduce a rendering time, improve rendering performance, and reduce a frame loss and stalling.

For example, for a second target node other than the to-be-processed instruction node, the to-be-traversed node, and the child node of the to-be-processed instruction node in the render tree, the electronic device determines the second target node as a static node, and performs node state resetting on the static node. Node state resetting includes but is not limited to dirty region recording and flag bit traversal.

In this implementation, for a node, in the render tree, that is neither marked as a to-be-processed instruction node nor marked as a to-be-traversed node and that is not a child node of the to-be-processed instruction node, the electronic device determines the node as a static node on which rendering information updating does not need to be performed, so that an updating operation on such a node can be skipped and removed. Because the node does not need to be updated, the electronic device may reset the current frame to state attribute information of such a node in the previous frame, to reduce an updating calculation operation.

For example, the method further includes:
performing node state resetting on the third target node.

In addition to operations such as dirty region recording and flag bit traversal, an instruction that is not executed in the third target node further needs to be cached in node state resetting on the third target node.

In this implementation, because the third target node has a to-be-processed instruction (that is, a to-be-processed instruction node), but updating removal is performed on the third target node because the third target node is completely occluded, during node state resetting of such a node, in addition to resetting the current frame to the state attribute information in the previous frame, an instruction that is not executed further needs to be cached, so that when a rendering service is triggered next time and an execution condition is met, a cache instruction that is not processed is executed.

It should be understood that, if the occlusion relationship between the plurality of windows changes, that is, it indicates that the occlusion relationship between the plurality of windows cannot be reused, a subtree corresponding to each window in the render tree needs to be traversed, and rendering information updating needs to be performed on a node with a to-be-processed instruction.

The foregoing describes the method in embodiments of this application, and the following provides an apparatus in embodiments of this application.

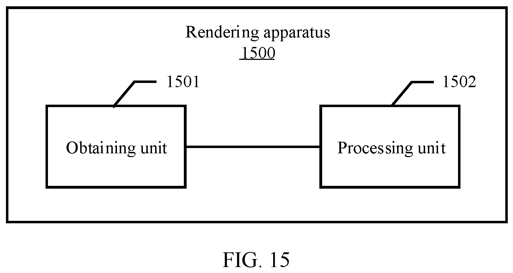

FIG. 15 is a diagram of a structure of a rendering apparatus 1500 according to an embodiment of this application. The rendering apparatus 1500 has a function of implementing the rendering method shown in FIG. 9 or FIG. 12. The function may be implemented by hardware, or may be implemented by hardware executing corresponding software. The hardware or the software includes one or more modules corresponding to the foregoing function.

In a possible implementation, the rendering apparatus 1500 includes an obtaining unit 1501 and a processing unit 1502. The obtaining unit 1501 is configured to obtain a to-be-processed instruction corresponding to a node in a render tree. The render tree is a render tree corresponding to a current display interface. The processing unit 1502 is configured to: perform information extraction on the to-be-processed instruction, to obtain attribute information of the to-be-processed instruction; determine a first target node with to-be-updated rendering information in the render tree based on the attribute information, and perform rendering information updating on the first target node, to obtain an updated render tree; and render an element in the current display interface based on the updated render tree.

In a possible implementation, the attribute information includes a node identifier of a node corresponding to the to-be-processed instruction, and the processing unit 1502 is specifically configured to:
mark a to-be-processed instruction node in the render tree based on the node identifier;
mark all parent nodes of the to-be-processed instruction node as a to-be-traversed node;
traverse the to-be-traversed node starting from a root node in the render tree, until the to-be-processed instruction node is traversed; and
determine that the to-be-processed instruction node and all child nodes of the to-be-processed instruction node are the first target node.

In a possible implementation, the attribute information includes a node identifier of a node corresponding to the to-be-processed instruction, an element on the screen includes a plurality of windows, and the processing unit 1502 is specifically configured to:
determine, based on the node identifier, whether a window node corresponding to any one of the plurality of windows exists in the node corresponding to the to-be-processed instruction;
if the window node exists in the node corresponding to the to-be-processed instruction, determine, based on the attribute information, whether an occlusion relationship between the plurality of windows changes;
determine a third target node in the render tree based on the attribute information if the occlusion relationship between the plurality of windows does not change, where the third target node is a node corresponding to a completely occluded element on the screen; and
determine the first target node based on the third target node.

In a possible implementation, the processing unit 1502 is further configured to:
if the window node does not exist in the node corresponding to the to-be-processed instruction, determine that the occlusion relationship between the plurality of windows does not change.

In a possible implementation, the attribute information includes an operation type of the to-be-processed instruction, and the processing unit 1502 is specifically configured to:
if the operation type of the to-be-processed instruction is not a first preset type, determine, based on coordinate information of a target element in a previous frame, whether the target element is completely in an occluded region of a window to which the target element belongs, where the target element is an element that corresponds to the node corresponding to the to-be-processed instruction on the screen, and the first preset type is an operation type that affects an element occlusion change corresponding to the node; and
if the target element is completely in the occluded region of the window to which the target element belongs, determine that the node corresponding to the to-be-processed instruction is the third target node.

In a possible implementation, the to-be-processed instruction includes a to-be-processed sub-instruction corresponding to the window node, the operation type of the to-be-processed instruction includes an operation type of the to-be-processed sub-instruction, and the processing unit 1502 is specifically configured to:
if the operation type of the to-be-processed sub-instruction is not a second preset type, determine that the occlusion relationship between the plurality of windows does not change, where the second preset type is an operation type that affects a window occlusion change; and
if the operation type of the to-be-processed sub-instruction is the second preset type, determine that the occlusion relationship between the plurality of windows changes.

In a possible implementation, the processing unit 1502 is specifically configured to:
mark a to-be-processed instruction node in the render tree based on the node identifier;
mark a parent node of the to-be-processed instruction node as a to-be-traversed node;
traverse the to-be-traversed node starting from a root node in the render tree, until the to-be-processed instruction node is traversed; and
determine that the to-be-processed instruction node and a node other than the third target node in a child node of the to-be-processed instruction node is the first target node; or
determine that a node other than the third target node in the render tree is the first target node.

In a possible implementation, the processing unit 1502 is further configured to:
determine that a second target node in the render tree is a static node, where the second target node is a node other than the to-be-processed instruction node, the to-be-traversed node, and the child node of the to-be-processed instruction node; and
perform node state resetting on the static node.

In a possible implementation, the processing unit 1502 is further configured to:
perform node state resetting on the third target node.

In a possible implementation, the processing unit 1502 is specifically configured to:
cache an instruction that is not executed in the third target node.

In a possible implementation, the to-be-processed instruction includes a cache instruction and a historical cache instruction that are obtained based on an instruction delivered by an application in a current frame.

It should be noted that, for an implementation of the units of the rendering apparatus 1500 described in FIG. 15, refer to corresponding descriptions of the embodiment shown in FIG. 9 or FIG. 12. In addition, for beneficial effects brought by the rendering apparatus 1500 described in FIG. 15, refer to corresponding descriptions of the embodiment shown in FIG. 9 or FIG. 12. Details are not described herein again.

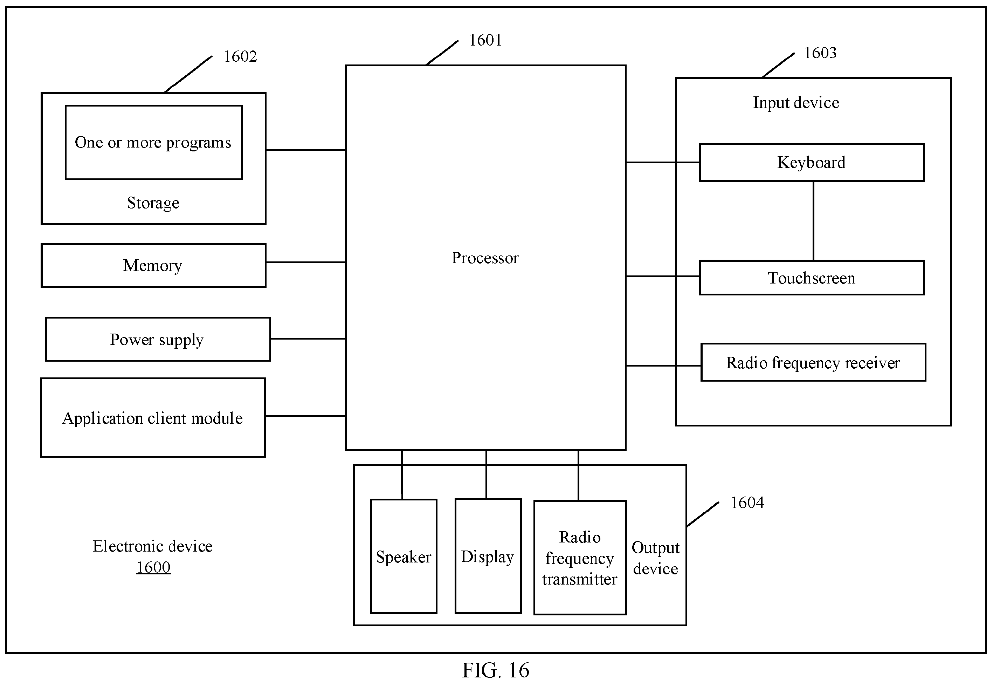

Based on the descriptions of the foregoing method embodiments and the foregoing apparatus embodiments, an embodiment of this application further provides an electronic device. FIG. 16 is a schematic structural diagram of an electronic device 1600 according to an embodiment of this application. The electronic device 1600 includes at least a processor 1601, a storage 1602, an input device 1603, an output device 1604, and one or more programs. The one or more programs are stored in the storage 1602, and all parts are connected to each other through a bus or in another manner. The input device 1603 and the output device 1604 may be a same device, and the input device 1603 may be configured to receive a user input (for example, a trigger event). The output device 1604 may be configured to output an interface rendered by the electronic device. The input device 1603 may be a keyboard, a touchscreen, a radio frequency receiver, or the like. The output device 1604 may be a speaker, a display, a radio frequency transmitter, or the like. The units shown in FIG. 15 may be implemented by using the processor 1601, the storage 1602, the input device 1603, and the output device 1604.

The storage 1602 includes but is not limited to a random access memory (random access memory, RAM), a read-only memory (read-only memory, ROM), an erasable programmable read-only memory (erasable programmable read only memory, EPROM), or a compact disc read-only memory (compact disc read-only memory, CD-ROM). The storage 1602 is configured to store related computer programs and data.

The processor 1601 may be one or more central processing units (central processing unit, CPU). When the processor 1601 is a CPU, the CPU may be a single-core CPU or a multi-core CPU.

The processor 1601 in the electronic device 1600 is configured to read one or more programs stored in the storage 1602, to perform the following operations:
obtaining a to-be-processed instruction corresponding to a node in a render tree, where the render tree is a render tree corresponding to a current display interface;
performing information extraction on the to-be-processed instruction, to obtain attribute information of the to-be-processed instruction;
determining a first target node with to-be-updated rendering information in the render tree based on the attribute information, and performing rendering information updating on the first target node, to obtain an updated render tree; and
rendering an element in the current display interface based on the updated render tree.

It should be noted that, for an implementation of each operation, refer to corresponding descriptions of the method in any embodiment shown in FIG. 9 or FIG. 12.

It should be noted that, although the electronic device 1600 shown in FIG. 16 shows only the processor 1601, the storage 1602, the input device 1603, and the output device 1604, in a specific implementation process, persons skilled in the art should understand that the electronic device 1600 further includes another component required for normal running, for example, a memory, a power supply, and an application client module. In addition, based on a specific requirement, persons skilled in the art should understand that the electronic device 1600 may further include a hardware component for implementing another additional function. In addition, persons skilled in the art should understand that the electronic device 1600 may include only a component necessary for implementing embodiments of this application, and does not need to include all the components shown in FIG. 16.

An embodiment of this application further provides a computer-readable storage medium (Memory). The computer-readable storage medium is a storage device in the electronic device 1600, and is configured to store a computer program to be executed by the device. When the computer program runs on the electronic device 1600, the method procedure shown in FIG. 9 or FIG. 12 is implemented. It can be understood that the computer-readable storage medium herein may include a built-in storage medium in the electronic device 1600, and certainly may also include an extended storage medium supported by the electronic device 1600. The computer-readable storage medium provides storage space, and the storage space stores an operating system of the electronic device 1600. In addition, the storage space further stores one or more computer programs that are suitable for being loaded and executed by the processor 1601. It should be noted that the computer-readable storage medium herein may be a high-speed RAM, or may be a nonvolatile memory (nonvolatile memory), for example, at least one magnetic disk memory. Optionally, the computer-readable storage medium may be at least one computer-readable storage medium located far away from the processor 1601.

An embodiment of this application further provides a chip system, used in an electronic device. The chip system includes one or more processors, and the processor is configured to invoke a computer program, so that the electronic device performs the method in any embodiment shown in FIG. 9 or FIG. 12.

An embodiment of this application further provides a computer program product. When the computer program product is run by an electronic device, the method procedure shown in FIG. 9 or FIG. 12 is implemented.

In the foregoing embodiments, the description of each embodiment has respective focuses. For a part that is not described in detail in an embodiment, reference may be made to related descriptions of other embodiments.

It should be understood that, the processor mentioned in embodiments of this application may be a CPU or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logical device, a discrete gate or transistor logic device, a discrete hardware component, or the like. The general-purpose processor may be a microprocessor, or the processor may be any conventional processor, or the like.

It may be further understood that the storage mentioned in embodiments of this application may be a volatile memory or a nonvolatile memory, or may include a volatile memory and a nonvolatile memory. The nonvolatile memory may be a ROM, a programmable read-only memory (Programmable ROM, PROM), an EPROM, an electrically erasable programmable read-only memory (Electrically EPROM, EEPROM), or a flash memory. The volatile memory may be a RAM, and serves as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or transistor logic device, or a discrete hardware component, the storage (storage module) is integrated into the processor.

It should be noted that the storage described in this specification aims to include but is not limited to these memories and any storage of another proper type.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

In the several embodiments provided in this application, it should be understood that the disclosed system, apparatus, and method may be implemented in another manner. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, in other words, can be located in one place, or can be distributed on a plurality of network units. Some or all of the units may be selected based on an actual requirement, to achieve the objectives of the solutions of embodiments.

In addition, functional units in embodiments of this application may be integrated into one processing unit, each of the units may exist alone physically, or two or more units are integrated into one unit. When the integrated unit is implemented in the form of a software functional unit and sold or used as an independent product, the integrated unit may be stored in a computer-readable storage medium.

In this application, "at least one" means one or more, and "a plurality of" means two or more. "And/or" describes an association relationship between associated objects, and represents that three relationships may exist. For example, A and/or B may represent the following cases: A exists alone, both A and B exist, and B exists alone, where A and B may be singular or plural. In text descriptions of this application, the character "/" generally represents an "or" relationship between associated objects.

A sequence of the steps of the method in embodiments of this application may be adjusted, combined, or removed based on an actual requirement.

The modules in the apparatus in embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

## Claims

1. A rendering method, wherein the method comprises:
obtaining a to-be-processed instruction corresponding to a node in a render tree, wherein the render tree is a render tree corresponding to a current display interface;
performing information extraction on the to-be-processed instruction, to obtain attribute information of the to-be-processed instruction;
determining a first target node with to-be-updated rendering information in the render tree based on the attribute information, and performing rendering information updating on the first target node, to obtain an updated render tree, wherein the updated render tree comprises the first target node with updated rendering information and another node with rendering information that is not updated; and
rendering an element in the current display interface based on the updated render tree.

2. The method according to claim 1, wherein the attribute information comprises a node identifier of a node corresponding to the to-be-processed instruction, and the determining a first target node with to-be-updated rendering information in the render tree based on the attribute information comprises:
marking a to-be-processed instruction node in the render tree based on the node identifier;
marking a parent node of the to-be-processed instruction node as a to-be-traversed node;
traversing the to-be-traversed node starting from a root node in the render tree, until the to-be-processed instruction node is traversed; and
determining that the to-be-processed instruction node and a child node of the to-be-processed instruction node are the first target node.

3. The method according to claim 1, wherein the attribute information comprises a node identifier of a node corresponding to the to-be-processed instruction, an element on the screen comprises a plurality of windows, and the determining a first target node with to-be-updated rendering information in the render tree based on the attribute information comprises:
determining, based on the node identifier, whether a window node corresponding to any one of the plurality of windows exists in the node corresponding to the to-be-processed instruction;
if the window node exists in the node corresponding to the to-be-processed instruction, determining, based on the attribute information, whether an occlusion relationship between the plurality of windows changes;
determining a third target node in the render tree based on the attribute information if the occlusion relationship between the plurality of windows does not change, wherein the third target node is a node corresponding to a completely occluded element on the screen; and
determining the first target node based on the third target node.

4. The method according to claim 3, wherein the method further comprises:
if the window node does not exist in the node corresponding to the to-be-processed instruction, determining that the occlusion relationship between the plurality of windows does not change.

5. The method according to claim 3, wherein the attribute information comprises an operation type of the to-be-processed instruction, and the determining a third target node in the render tree based on the attribute information comprises:
if the operation type of the to-be-processed instruction is not a first preset type, determining, based on coordinate information of a target element in a previous frame, whether the target element is completely in an occluded region of a window to which the target element belongs, wherein the target element is an element that corresponds to the node corresponding to the to-be-processed instruction on the screen, and the first preset type is an operation type that affects an element occlusion change corresponding to the node; and
if the target element is completely in the occluded region of the window to which the target element belongs, determining that the node corresponding to the to-be-processed instruction is the third target node.

6. The method according to claim 5, wherein the to-be-processed instruction comprises a to-be-processed sub-instruction corresponding to the window node, the operation type of the to-be-processed instruction comprises an operation type of the to-be-processed sub-instruction, and the determining, based on the attribute information, whether an occlusion relationship between the plurality of windows changes comprises:
if the operation type of the to-be-processed sub-instruction is not a second preset type, determining that the occlusion relationship between the plurality of windows does not change, wherein the second preset type is an operation type that affects a window occlusion change; and
if the operation type of the to-be-processed sub-instruction is the second preset type, determining that the occlusion relationship between the plurality of windows changes.

7. The method according to claim 3, wherein the determining the first target node based on the third target node comprises:
marking a to-be-processed instruction node in the render tree based on the node identifier;
marking a parent node of the to-be-processed instruction node as a to-be-traversed node;
traversing the to-be-traversed node starting from a root node in the render tree, until the to-be-processed instruction node is traversed; and
determining that the to-be-processed instruction node and a node other than the third target node in a child node of the to-be-processed instruction node is the first target node; or
determining that a node other than the third target node in the render tree is the first target node.

8. The method according to claim 2 or 7, wherein the method further comprises:
determining that a second target node in the render tree is a static node, wherein the second target node is a node other than the to-be-processed instruction node, the to-be-traversed node, and the child node of the to-be-processed instruction node; and
performing node state resetting on the static node.

9. The method according to any one of claims 3 to 7, wherein the method further comprises:
performing node state resetting on the third target node.

10. The method according to claim 9, wherein the performing node state resetting on the third target node comprises:
caching an instruction that is not executed in the third target node.

11. The method according to any one of claims 1 to 10, wherein the to-be-processed instruction comprises a cache instruction and a historical cache instruction that are obtained based on an instruction delivered by an application in a current frame.

12. A rendering apparatus, wherein the apparatus comprises an obtaining unit and a processing unit, wherein
the obtaining unit is configured to obtain a to-be-processed instruction corresponding to a node in a render tree, wherein the render tree is a render tree corresponding to a current display interface; and
the processing unit is configured to: perform information extraction on the to-be-processed instruction, to obtain attribute information of the to-be-processed instruction; determine a first target node with to-be-updated rendering information in the render tree based on the attribute information, and perform rendering information updating on the first target node, to obtain an updated render tree; and render an element in the current display interface based on the updated render tree, wherein the updated render tree comprises the first target node with updated rendering information and another node with rendering information that is not updated.

13. The apparatus according to claim 12, wherein the attribute information comprises a node identifier of a node corresponding to the to-be-processed instruction, and the processing unit is specifically configured to:
mark a to-be-processed instruction node in the render tree based on the node identifier;
mark a parent node of the to-be-processed instruction node as a to-be-traversed node;
traverse the to-be-traversed node starting from a root node in the render tree, until the to-be-processed instruction node is traversed; and
determine that the to-be-processed instruction node and a child node of the to-be-processed instruction node are the first target node.

14. The apparatus according to claim 12, wherein the attribute information comprises a node identifier of a node corresponding to the to-be-processed instruction, an element on the screen comprises a plurality of windows, and the processing unit is specifically configured to:
determine, based on the node identifier, whether a window node corresponding to any one of the plurality of windows exists in the node corresponding to the to-be-processed instruction;
if the window node exists in the node corresponding to the to-be-processed instruction, determine, based on the attribute information, whether an occlusion relationship between the plurality of windows changes;
determine a third target node in the render tree based on the attribute information if the occlusion relationship between the plurality of windows does not change, wherein the third target node is a node corresponding to a completely occluded element on the screen; and
determine the first target node based on the third target node.

15. The apparatus according to claim 14, wherein the processing unit is further configured to:
if the window node does not exist in the node corresponding to the to-be-processed instruction, determine that the occlusion relationship between the plurality of windows does not change.

16. The apparatus according to claim 14, wherein the attribute information comprises an operation type of the to-be-processed instruction, and the processing unit is specifically configured to:
if the operation type of the to-be-processed instruction is not a first preset type, determine, based on coordinate information of a target element in a previous frame, whether the target element is completely in an occluded region of a window to which the target element belongs, wherein the target element is an element that corresponds to the node corresponding to the to-be-processed instruction on the screen, and the first preset type is an operation type that affects an element occlusion change corresponding to the node; and
if the target element is completely in the occluded region of the window to which the target element belongs, determine that the node corresponding to the to-be-processed instruction is the third target node.

17. The apparatus according to claim 16, wherein the to-be-processed instruction comprises a to-be-processed sub-instruction corresponding to the window node, the operation type of the to-be-processed instruction comprises an operation type of the to-be-processed sub-instruction, and the processing unit is specifically configured to:
if the operation type of the to-be-processed sub-instruction is not a second preset type, determine that the occlusion relationship between the plurality of windows does not change, wherein the second preset type is an operation type that affects a window occlusion change; and
if the operation type of the to-be-processed sub-instruction is the second preset type, determine that the occlusion relationship between the plurality of windows changes.

18. The apparatus according to claim 14, wherein the processing unit is specifically configured to:
mark a to-be-processed instruction node in the render tree based on the node identifier;
mark a parent node of the to-be-processed instruction node as a to-be-traversed node;
traverse the to-be-traversed node starting from a root node in the render tree, until the to-be-processed instruction node is traversed; and
determine that the to-be-processed instruction node and a node other than the third target node in a child node of the to-be-processed instruction node is the first target node; or
determine that a node other than the third target node in the render tree is the first target node.

19. The apparatus according to claim 13 or 18, wherein the processing unit is further configured to:
determine that a second target node in the render tree is a static node, wherein the second target node is a node other than the to-be-processed instruction node, the to-be-traversed node, and the child node of the to-be-processed instruction node; and
perform node state resetting on the static node.

20. The apparatus according to any one of claims 14 to 18, wherein the processing unit is further configured to:
perform node state resetting on the third target node.

21. The apparatus according to claim 20, wherein the processing unit is specifically configured to:
cache an instruction that is not executed in the third target node.

22. The apparatus according to any one of claims 12 to 21, wherein the to-be-processed instruction comprises a cache instruction and a historical cache instruction that are obtained based on an instruction delivered by an application in a current frame.

23. An electronic device, comprising a processor, a storage, and one or more programs, wherein the processor is connected to the storage, the one or more programs are stored in the storage, and when the one or more programs are configured to be executed by the processor, the method according to any one of claims 1 to 11 is implemented.

24. A computer-readable storage medium, wherein the computer-readable storage medium stores a computer program to be executed by an electronic device, and when the computer program is executed, the method according to any one of claims 1 to 11 is implemented.

25. A computer program product, wherein when the computer program product runs on an electronic device, the electronic device is enabled to perform the method according to any one of claims 1 to 11.
